(19) Europäisches Patentamt
European Patent Office
Office européen des brevets

(11) **EP 3 465 608 B1**

(12) **EUROPÄISCHE PATENTSCHRIFT**

(45) Veröffentlichungstag und Bekanntmachung des Hinweises auf die Patenterteilung:
**20.03.2024 Patentblatt 2024/12**

(21) Anmeldenummer: **17755056.3**

(22) Anmeldetag: **30.05.2017**

(51) Internationale Patentklassifikation (IPC):
**G06T 3/40** *(2024.01)*     **G06T 13/20** *(2011.01)*
**G06T 15/04** *(2011.01)*

(52) Gemeinsame Patentklassifikation (CPC):
**G06T 3/4007; G06T 13/80; G06T 15/10;**
G06T 2210/44

(86) Internationale Anmeldenummer:
**PCT/DE2017/200046**

(87) Internationale Veröffentlichungsnummer:
**WO 2017/207001 (07.12.2017 Gazette 2017/49)**

(54) **VERFAHREN UND VORRICHTUNG ZUM BESTIMMEN EINES ÜBERGANGS ZWISCHEN ZWEI ANZEIGEBILDERN, UND FAHRZEUG**

METHOD AND DEVICE FOR DETERMINING A TRANSFER BETWEEN TWO DISPLAY IMAGES, AND VEHICLE

PROCÉDÉ ET DISPOSITIF DE DÉTERMINATION D'UNE TRANSITION ENTRE DEUX IMAGES AFFICHÉES ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2016 DE 102016209662**

(43) Veröffentlichungstag der Anmeldung:
**10.04.2019 Patentblatt 2019/15**

(73) Patentinhaber: **Continental Autonomous Mobility Germany GmbH**
**85057 Ingolstadt (DE)**

(72) Erfinder: **ARBEITER, Georg**
**96328 Küps (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**EP-A1- 2 285 109     EP-B1- 2 285 109**

**US-B1- 6 597 368**

• **KANAI T ET AL: "Metamorphosis of arbitrary triangular meshes", IEEE COMPUTER GRAPHICS AND APPLICATIONS, IEEE SERVICE CENTER, NEW YORK, NY, US, Bd. 20, Nr. 2, 1. März 2000 (2000-03-01), Seiten 62-75, XP002903656, ISSN: 0272-1716, DOI: 10.1109/38.824544**
• **SHEFFER A ET AL: "Pyramid coordinates for morphing and deformation", 3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE, 6. September 2004 (2004-09-06), Seiten 68-75, XP010725056, DOI: 10.1109/TDPVT.2004.1335149 ISBN: 978-0-7695-2223-4**
• **Unknown: "360° Wrap-Around Video Imaging Technology Ready for Integration with Fujitsu Graphics SoCs", , 1. Januar 2014 (2014-01-01), XP055406437, Gefunden im Internet: URL:https://www.fujitsu.com/us/Images/360_OmniView_AppNote.pdf [gefunden am 2017-09-13]**

## Beschreibung

Die Erfindung betrifft ein Verfahren zum Bestimmen eines Übergangs zwischen zwei Anzeigebildern, eine Bildbearbeitungsvorrichtung zum Bestimmen eines Übergangs zwischen zwei Anzeigebildern, und ein Fahrzeug.

Ein Übergang zwischen Modellen, welche anhand verschiedener Ausgangsbilder bestimmt werden, ist aus der US 6 597 368 B1 bekannt. Kanai et al., "Metamorphosis of arbitrary triangular meshes", IEEE Computer Graphics and Applications, Bd. 20, Nr. 2, 2000, Seiten 62-75, betrifft eine Interpolation von triangulierten Gittern. Weiter ist aus Sheffer et al., "Pyramid coordinates for morphing and deformation", 3D data Processing, Visualization and Transmission, 2004, Seiten 68-75, ein Morphingverfahren bekannt.

Surround-View-Systeme für Fahrzeuge erzeugen Kamerabilder, welche einen breiten Umfeldbereich des Fahrzeugs erfassen. So ist etwa aus der DE 102013209159 B4 eine entsprechende Surroundview-Kamera mit Fischaugen-Optik offenbart.

Derartige Kamerabilder sind jedoch aufgrund ihrer starken und unnatürlich wirkenden Verzerrung zur direkten Anzeige meist nicht geeignet und müssen daher entsprechend transformiert werden. Hierzu kann das Kamerabild in verschiedene Ansichten transformiert werden. So kann etwa einerseits eine in den Randbereichen stark verzerrte Fischaugenansicht gewählt werden, welche dem Fahrer einen schnellen Überblick verschafft. Andererseits kann das Kamerabild in eine perspektivische Ansicht transformiert werden, so dass eine gute Einschätzung der tatsächlichen Lage der abgebildeten Objekte ermöglicht wird.

Zwischen Anzeigebildern mit verschiedenen Ansichten kann nun beispielsweise durch einen scharfen Schnitt gewechselt werden. Dies birgt jedoch die Gefahr, dass der Fahrer durch den schnellen und unerwarteten Übergang irritiert wird.

Es ist daher eine Aufgabe der Erfindung, einen kontinuierlichen und gleichmäßigen Übergang zwischen zwei Anzeigebildern zu ermöglichen.

Diese Aufgabe wird gelöst durch ein Verfahren zum Bestimmen eines Übergangs zwischen zwei Anzeigebildern mit den Merkmalen des Patentanspruchs 1, eine Bildbearbeitungsvorrichtung zum Bestimmen eines Übergangs zwischen zwei Anzeigebildern mit den Merkmalen des Patentanspruchs 10, und ein Fahrzeug mit den Merkmalen des Patentanspruchs 14.

Weitere bevorzugte Ausführungsformen sind Gegenstand der Unteransprüche.

Gemäß einem ersten Aspekt betrifft die Erfindung demnach ein Verfahren zum Bestimmen eines Übergangs zwischen zwei Anzeigebildern. Hierbei wird ein zweidimensionales Ausgangsbild mittels einer ersten Abbildungsfunktion auf ein erstes Abbild in einem dreidimensionalen Modellraum abgebildet und das erste Abbild auf ein erstes Anzeigebild abgebildet. Weiter wird das zweidimensionale Ausgangsbild mittels einer zweiten Abbildungsfunktion auf ein zweites Abbild in dem dreidimensionalen Modellraum abgebildet und das zweite Abbild auf ein zweites Anzeigebild abgebildet. Das Ausgangsbild wird mittels einer interpolierenden Abbildungsfunktion auf ein interpolierendes Abbild in dem Modellraum abgebildet, wobei das interpolierende Abbild durch Interpolieren des ersten Abbilds und des zweiten Abbilds in Abhängigkeit von einem Interpolationsparameter bestimmt wird. Das mittels der interpolierenden Abbildungsfunktion auf das interpolierende Abbild abgebildete Ausgangsbild wird auf ein interpolierendes Anzeigebild abgebildet, welches durch Variieren des Interpolationsparameters von dem ersten Anzeigebild zu dem zweiten Anzeigebild übergeht.

Gemäß einem zweiten Aspekt stellt die Erfindung demnach eine Bildbearbeitungsvorrichtung zum Bestimmen eines Übergangs zwischen zwei Anzeigebildern bereit. Die Bildbearbeitungsvorrichtung umfasst eine erste Bilderzeugungseinrichtung, welche dazu ausgebildet ist, ein zweidimensionales Ausgangsbild mittels einer ersten Abbildungsfunktion auf ein erstes Abbild in einem dreidimensionalen Modellraum abzubilden und das erste Abbild auf ein erstes Anzeigebild abzubilden. Die Bildverarbeitungseinrichtung umfasst weiter eine zweite Bilderzeugungseinrichtung, welche dazu ausgebildet ist, das Ausgangsbild mittels einer zweiten Abbildungsfunktion auf ein zweites Abbild in dem dreidimensionalen Modellraum abzubilden und das zweite Abbild auf ein zweites Anzeigebild abzubilden. Die Bildverarbeitungseinrichtung umfasst eine Interpolationseinrichtung, welche dazu ausgebildet ist, das Ausgangsbild mittels einer interpolierenden Abbildungsfunktion auf ein interpolierendes Abbild in dem Modellraum abzubilden, wobei die Interpolationseinrichtung dazu ausgebildet ist, das interpolierende Abbild durch Interpolieren des ersten Abbilds und des zweiten Abbilds in Abhängigkeit von einem Interpolationsparameter zu bestimmen.

Weiter umfasst die Bildverarbeitungseinrichtung eine Übergangsbilderzeugungseinrichtung, welche dazu ausgebildet ist, das mittels der interpolierenden Abbildungsfunktion auf das interpolierende Abbild abgebildete Ausgangsbild auf ein interpolierendes Anzeigebild abzubilden, welches durch Variieren des Interpolationsparameters von dem ersten Anzeigebild zu dem zweiten Anzeigebild übergeht.

Gemäß einem dritten Aspekt stellt die Erfindung ein Fahrzeug bereit, welches mindestens eine Kameraeinrichtung aufweist, welche dazu ausgebildet ist, ein Ausgangsbild zu erzeugen. Das Fahrzeug umfasst weiter eine Bildbearbeitungsvorrichtung zum Bestimmen eines Übergangs zwischen zwei Anzeigebildern anhand des erzeugten Ausgangsbild.

Die Erfindung erlaubt es, durch einen sehr schnellen und effizienten Algorithmus zwischen zwei Anzeigebildern kontinuierlich zu wechseln, indem die entsprechenden Abbilder bereits in dem Modellraum interpoliert werden. Durch Variieren des Interpolationsparameters geht das erste Anzeigebild dadurch stetig und gleichmäßig in das zweite Anzeigebild über.

Gemäß einer bevorzugten Weiterbildung des Verfahrens wird die interpolierende Abbildungsfunktion durch Interpolieren der ersten Abbildungsfunktion und der zweiten Abbildungsfunktion in Abhängigkeit von dem Interpolationsparameter bestimmt. Die interpolierende Abbildungsfunktion kann dadurch schnell berechnet werden und ermöglicht es, das interpolierende Abbild anhand des Ausgangsbildes zu bestimmen.

Gemäß einer bevorzugten Weiterbildung des Verfahrens umfasst der dreidimensionale Modellraum ein Gitter. Das erste Abbild weist eine erste Menge von Gitterpunkten des Gitters auf, wobei die erste Abbildungsfunktion anhand von ersten Texturkoordinaten der Gitterpunkte der ersten Menge von Gitterpunkten bestimmt wird. Das zweite Abbild weist eine zweite Menge von Gitterpunkten des Gitters auf, wobei die zweite Abbildungsfunktion anhand von zweiten Texturkoordinaten der Gitterpunkte der zweiten Menge von Gitterpunkten bestimmt wird. Die Texturkoordinaten beinhalten sowohl Koordinaten des Gitterpunkts in dem Gitter als auch die entsprechenden Koordinaten des Ausgangsbildes. Jedem ersten bzw. zweiten Gitterpunkt ist somit vorzugsweise ein eindeutiger Punkt bzw. ein eindeutiges Pixel des Ausgangsbildes zugeordnet und vorzugsweise auch umgekehrt, so dass Pixel des Ausgangsbildes mittels der Texturkoordinaten auf das entsprechende Abbild abgebildet werden können.

Gemäß einer bevorzugten Weiterbildung des Verfahrens wird jedem Gitterpunkt der ersten Menge von Gitterpunkten ein Gitterpunkt der zweiten Menge von Gitterpunkten zugeordnet, wobei das interpolierende Abbild für jeden Gitterpunkt der ersten Menge von Gitterpunkten durch Interpolieren mit dem zugeordneten Gitterpunkt der zweiten Menge von Gitterpunkten bestimmt wird. Die interpolierende Abbildungsfunktion wird für jeden Gitterpunkt der ersten Menge von Gitterpunkten durch Interpolieren der entsprechenden ersten Texturkoordinaten mit den zweiten Texturkoordinaten des zugeordneten Gitterpunkts der zweiten Menge von Gitterpunkten bestimmt. Dadurch wird ein eindeutiger Übergang des ersten Abbilds zu dem zweiten Abbild ermöglicht, da jeder Gitterpunkt der ersten Menge von Gitterpunkten mit einem eindeutigen Gitterpunkt der zweiten Menge von Gitterpunkten verknüpft ist.

Gemäß einer bevorzugten Weiterbildung des Verfahrens wird das Zuordnen eines jeweiligen Gitterpunkts der zweiten Menge von Gitterpunkten zu jedem Gitterpunkt der ersten Menge von Gitterpunkten mittels Nächster-Nachbar-Suche durchgeführt.

Erfindungsgemäß umfasst das Abbilden des mittels der interpolierenden Abbildungsfunktion auf das interpolierende Abbild abgebildeten Ausgangsbildes auf das interpolierende Anzeigebild das Bestimmen einer ersten Kameraabbildung und einer zweiten Kameraabbildung, welche das auf das erste Abbild bzw. zweite Abbild projizierte Ausgangsbild auf das erste Anzeigebild bzw. zweite Anzeigebild abbilden. Weiter wird eine interpolierende Kameraabbildung bestimmt, welche das mittels der interpolierenden Abbildungsfunktion auf das interpolierende Abbild abgebildete Ausgangsbild auf das interpolierende Anzeigebild abbildet, wobei die interpolierende Kameraabbildung von dem Interpolationsparameter abhängt. Die jeweilige Kameraabbildung entspricht entsprechenden virtuellen Kameras in dem Modellraum, so dass die Abbilder aus verschiedenen Perspektiven bzw. Blickwinkeln auf das jeweilige Anzeigebild abgebildet werden können.

Gemäß einer bevorzugten Weiterbildung des Verfahrens umfasst das Bestimmen der interpolierenden Kameraabbildung das Interpolieren der ersten Kameraabbildung und der zweiten Kameraabbildung.

Gemäß einer bevorzugten Weiterbildung des Verfahrens umfasst das Bestimmen der ersten Kameraabbildung und der zweiten Kameraabbildung das Verketten einer ersten bzw. zweiten Transformationsabbildung mit einer ersten bzw. zweiten Projektionsabbildung. Die erste bzw. zweite Transformationsabbildung bildet das erste bzw. zweite Abbild auf ein transformiertes erstes bzw. zweites Abbild ab. Die erste bzw. zweite Projektionsabbildung projiziert das transformierte erste bzw. zweite Abbild auf das erste bzw. zweite Anzeigebild. Die Transformationsabbildungen umfassen vorzugsweise eine Rotation bzw. Translation des ersten Abbilds bzw. zweiten Abbilds auf entsprechende transformierte Abbilder und ermöglichen somit eine Vielzahl von perspektivischen Ansichten des jeweiligen Anzeigebilds.

Gemäß einer bevorzugten Weiterbildung des Verfahrens umfasst das Bestimmen der interpolierenden Kameraabbildung das Verketten einer interpolierenden Transformationsabbildung mit einer interpolierenden Projektionsabbildung. Die interpolierende Transformationsabbildung wird durch Interpolieren der ersten Transformationsabbildung und der zweiten Transformationsabbildung in Abhängigkeit von dem Interpolationsparameter bestimmt. Die interpolierende Projektionsabbildung wird durch Interpolieren der ersten Projektionsabbildung und der zweiten Projektionsabbildung in Abhängigkeit von dem Interpolationsparameter bestimmt.

Gemäß einer bevorzugten Weiterbildung des Verfahrens werden das Bestimmen des interpolierenden Abbilds und/oder das Bestimmen der interpolierenden Abbildungsfunktion durch lineare oder polynomiale Interpolation durchgeführt.

Gemäß einer bevorzugten Weiterbildung umfasst die Bildbearbeitungsvorrichtung eine Bildanzeigeeinrichtung, welche dazu ausgebildet ist, das interpolierende Anzeigebild anzuzeigen.

Gemäß einer bevorzugten Weiterbildung der Bildbearbeitungsvorrichtung ist die Interpolationseinrichtung dazu ausgebildet, die interpolierende Abbildungsfunktion durch Interpolieren der ersten Abbildungsfunktion und der zweiten Abbildungsfunktion in Abhängigkeit von dem Interpolationsparameter zu bestimmen.

Gemäß einer bevorzugten Weiterbildung der Bildbearbeitungsvorrichtung ist die Interpolationseinrichtung dazu ausgebildet, das interpolierende Abbild und/oder die interpolierende Abbildungsfunktion durch lineare oder polynomiale Interpolation zu bestimmen.

Die vorliegende Erfindung wird nachfolgend anhand der in den schematischen Figuren der Zeichnungen angegebenen Ausführungsbeispiele näher erläutert.

Es zeigen:

Fig. 1 ein Flussdiagramm zur Erläuterung eines Verfahrens zum Bestimmen eines Übergangs zwischen zwei Anzeigebildern gemäß einer Ausführungsform der Erfindung;

Fig. 2 eine schematische Ansicht zur Erläuterung der Erzeugung eines ersten Anzeigebilds, eines zweiten Anzeigebilds und eines interpolierenden Anzeigebilds;

Fig. 3 eine schematische Ansicht zur Erläuterung der Anzeige des ersten Anzeigebilds, des zweiten Anzeigebilds und des interpolierenden Anzeigebilds auf einer Anzeigeeinrichtung;

Fig. 4 ein schematisches Blockschaltbild einer Bildbearbeitungsvorrichtung zum Bestimmen eines Übergangs zwischen zwei Anzeigebildern gemäß einer Ausführungsform der Erfindung; und

Fig. 5 ein schematisches Blockschaltbild eines Fahrzeugs gemäß einer Ausführungsform der Erfindung.

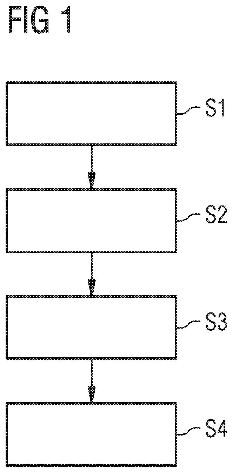

Fig. 1 zeigt ein Flussdiagramm zur Erläuterung eines Verfahrens zum Bestimmen eines Übergangs zwischen zwei Anzeigebildern gemäß einer Ausführungsform der Erfindung.

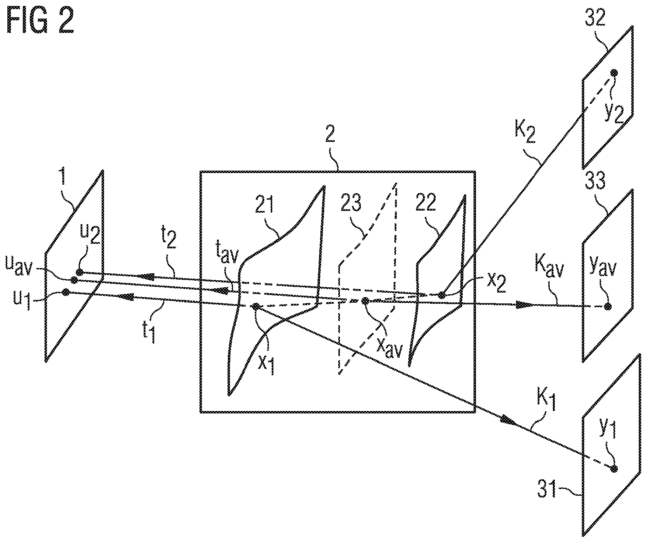

Das Verfahren wird anhand der in Figur 2 gezeigten schematischen Ansicht im Folgenden genauer erläutert.

In einem ersten Verfahrensschritt S1 wird ein zweidimensionales Ausgangsbild 1 mittels einer ersten Abbildungsfunktion auf ein erstes Abbild 21 in einem dreidimensionalen Modellraum 2 abgebildet und das erste Abbild 21 anschließend auf ein erstes Anzeigebild 31 abgebildet, was im Folgenden näher erläutert wird.

Das Ausgangsbild 1 kann beispielsweise ein Kamerabild sein, welches anhand von Kameradaten von einer oder mehreren Fahrzeugkameras generiert wird. Der dreidimensionale Modellraum 2 weist ein Gitter mit einer Vielzahl von Gitterpunkten auf. Das erste Abbild 21 wird durch eine erste Menge von Gitterpunkten $x_1$ bestimmt, welchen jeweilige erste Texturkoordinaten $t_1$ zugeordnet werden. Die ersten Texturkoordinaten $t_1$ umfassen dreidimensionale Gitterkoordinaten des Gitterpunkts $x_1$ sowie zweidimensionale Ausgangsbildkoordinaten $u_1$ des Ausgangsbilds 1. Die ersten Texturkoordinaten $t_1$ dienen somit dazu, den Gitterpunkten $x_1$ des ersten Abbilds 21 Ausgangsbildkoordinaten $u_1$ des Ausgangsbilds 1 zuzuordnen. Umgekehrt können durch Umkehrung die Ausgangsbildkoordinaten $u_1$ des Ausgangsbildes 1 anhand der ersten Texturkoordinaten $t_1$ auf die Gitterpunkte $x_1$ des ersten Abbildes 21 abgebildet werden. Somit wird anhand der ersten Texturkoordinaten $t_1$ eine erste Abbildungsfunktion bestimmt, welche das Ausgangsbild 1 auf das erste Abbild 21 abbildet.

Die ersten Gitterpunkte $x_1$ werden vorzugsweise durch Matrix-Vektor-Multiplikation von einer ersten Modellmatrix $M_1$ mit ersten Modellkoordinaten $v_1$ erzeugt, wie durch folgende Formel ausgedrückt wird:

$$x_1 = M_1 v_1 \; .$$

Dieser Schritt ist jedoch optional. Insbesondere kann die Modellmatrix $M_1$ eine Einheitsmatrix sein.

Das Abbilden des ersten Abbilds 21 auf das erste Anzeigebild 31 erfolgt mittels einer ersten Kameraabbildung $K_1$, welche durch Verketten einer ersten Transformationsabbildung $V_1$ und einer ersten Projektionsabbildung $P_1$ gebildet wird, wie durch folgende Formel ausgedrückt:

$$K_1 = P_1 V_1 \; .$$

Hierzu werden die ersten Gitterpunkte $x_1$ als vierdimensionale Vektoren dargestellt, deren ersten drei Einträge den dreidimensionalen Gitterkoordinaten des Gitterpunkts $x_1$ entsprechen, während der letzte Eintrag gleich Eins gesetzt wird. Die erste Transformationsabbildung $V_1$ wird als 4x4-Matrix dargestellt, welche folgende Form aufweist:

$$V_1 = \begin{pmatrix} A & b \\ 0 & 1 \end{pmatrix},$$

wobei A eine 3x3-Matrix ist, welche eine Rotation darstellt, b ein dreikomponentiger Spaltenvektor ist, welcher eine Translation darstellt, und die 0 einen dreikomponentigen Zeilenvektor mit Null-Einträgen darstellt. Die Transformationsabbildung V1 wirkt durch Matrix-Vektor-Multiplikation auf den Gitterpunkt x1 gemäß folgender Formel:

$$V_1 x_1 \,,$$

wodurch ein transformierter Gitterpunkt erzeugt wird, dessen vierte Komponente wiederum gleich 1 ist. Die Transformationsabbildung V1 bildet somit das erste Abbild 21 auf ein transformiertes erstes Abbild ab.

Die erste Projektionsabbildung P1 projiziert den transformierten Gitterpunkt auf erste Anzeigebildkoordinaten y1, welche durch einen zweidimensionalen Vektor dargestellt werden und Koordinaten des ersten Anzeigebildes 31 entsprechen. Beispielsweise kann die erste Projektionsabbildung P1 als 2x4-Matrix dargestellt werden, welche beispielsweise auf die ersten beiden Komponenten projiziert. Somit gilt:

$$K_1 x_1 = P_1 V_1 x_1 = y_1 \,.$$

Somit bildet die erste Kameraabbildung K1 den Gitterpunkt x1 auf einen Punkt bzw. ein Pixel des ersten Anzeigebilds 31 ab. Durch die Abbildung sämtlicher Gitterpunkte x1 des ersten Abbilds 21 auf das erste Anzeigebild 31 wird dieses aufgebaut und erzeugt. Die erste Projektionsabbildung P1 projiziert somit das transformierte erste Abbild auf das erste Anzeigebild 31.

In einem zweiten Verfahrensschritt S2 wird das zweidimensionale Ausgangsbild 1 mittels einer zweiten Abbildungsfunktion auf ein zweites Abbild 22 in dem dreidimensionalen Modellraum 2 abgebildet und das zweite Abbild 22 auf ein zweites Anzeigebild 32 abgebildet. Der zweite Verfahrensschritt kann analog zu dem oben beschriebenen ersten Verfahrensschritt das Abbilden des Ausgangsbildes 1 auf ein zweites Abbild 22 mittels zweiter Texturkoordinaten t2 von Gitterpunkten x2 einer zweiten Menge von Gitterpunkten umfassen. Die zweiten Texturkoordinaten t2 weisen den zweiten Gitterpunkten x2 entsprechende zweite Ausgangsbildkoordinaten u2 zu. Die zweite Menge von Gitterpunkten x2 unterscheidet sich vorzugsweise zumindest teilweise von der ersten Menge von Gitterpunkten x1. Das erste Abbild 21 und das zweite Abbild 22 entsprechen somit Projektionen des Ausgangsbildes 1 auf unterschiedliche Flächen in dem Modellraum 2, welche durch die Gitterkoordinaten des ersten Abbilds 21 bzw. zweiten Abbilds 22 gehen.

Das Abbilden des zweiten Abbilds 22 auf das zweite Anzeigebild 32 erfolgt mittels einer zweiten Kameraabbildung K2, welche analog zur obigen Beschreibung durch Verketten einer zweiten Transformationsabbildung V2 und einer zweiten Projektionsabbildung P2 gebildet wird. Gemäß einer Ausführungsform ist die zweite Transformationsabbildung V2 mit der ersten Transformationsabbildung V1 identisch und/oder die zweite Projektionsabbildung P2 mit der ersten Projektionsabbildung P1 identisch.

In einem dritten Verfahrensschritt S3 wird das Ausgangsbild 1 mittels einer interpolierenden Abbildungsfunktion auf ein interpolierendes Abbild 23 in dem Modellraum 2 abgebildet.

Hierzu wird zuerst jedem Gitterpunkt x1 der ersten Menge von Gitterpunkten - im Folgenden als erster Gitterpunkt bezeichnet - ein Gitterpunkt x2 der zweiten Menge von Gitterpunkten zugeordnet, welcher als zweiter Gitterpunkt bezeichnet wird. Der zweite Gitterpunkt x2 kann vorzugsweise durch Nächste-Nachbar-Suche bestimmt werden, so dass derjenige Gitterpunkt x2 der zweiten Menge von Gitterpunkten dem ersten Gitterpunkt x1 zugeordnet wird, welcher den geringsten Abstand in dem Modellraum 2 aufweist. Vorzugsweise ist jedem ersten Gitterpunkt x1 genau ein zweiter Gitterpunkt x2 zugeordnet.

Für jeden ersten Gitterpunkt x1 ersten Menge von Gitterpunkten werden interpolierende Gitterpunkte xw des interpolierenden Abbilds 23 durch lineare Interpolation des ersten Gitterpunkts x1 mit dem zugeordneten zweiten Gitterpunkt x2 erzeugt, wie sich durch folgende Formel ausdrücken lässt:

$$x_w = w \cdot x_1 + (1 - w) \cdot x_2 \,.$$

Hierbei ist w ein Interpolationsparameter, welcher zwischen 0 und 1 variierbar ist. Falls die ersten und zweiten Gitterpunkte x1, x2 mittels Modellmatrizen M1, M2 erzeugt werden, gilt folgende Formel:

$$x_w = w \cdot M_1 v_1 + (1 - w) \cdot M_2 v_2 \; .$$

Die interpolierenden Gitterpunkte xw hängen somit von dem Interpolationsparameter w ab und interpolieren linear zwischen dem ersten Gitterpunkt x1 (für w = 1) und dem zweiten Gitterpunkt x2 (für w = 0). Gemäß weiteren Ausführungsformen kann auch ein beliebiges anderes Interpolationsverfahren, insbesondere ein quadratisches oder polynomiales Interpolationsverfahren gewählt werden.

Jedem interpolierenden Gitterpunkt xw werden interpolierende Texturkoordinaten tw durch lineare Interpolation der ersten Texturkoordinaten t1 des ersten Gitterpunkts x1 und der zweiten Texturkoordinaten t2 des zweiten Gitterpunkts x2 zugeordnet, wie sich durch folgende Formel ausdrücken lässt:

$$t_w = w \cdot t_1 + (1 - w) \cdot t_2 \; .$$

Die interpolierenden Texturkoordinaten tw hängen von dem Interpolationsparameter w ab und interpolieren linear zwischen den Texturkoordinaten t1 des ersten Gitterpunkts x1 (für w = 1) und den Texturkoordinaten t2 des zweiten Gitterpunkts x2 (für w = 0). Wiederum ist auch ein anderes, insbesondere quadratisches oder polynomiales Interpolationsverfahren möglich. Vorzugsweise wird für das Bestimmen der interpolierenden Gitterpunkte xw und für das Bestimmen der interpolierenden Texturkoordinaten tw dasselbe Interpolationsverfahren gewählt.

Die interpolierenden Texturkoordinaten tw liefern für einen beliebigen Wert des Interpolationsparameters w eine Beziehung zwischen dem entsprechenden interpolierenden Gitterpunkt xw und entsprechenden interpolierende Ausgangsbildkoordinaten uw des Ausgangsbilds 1. Umgekehrt kann mittels der interpolierenden Texturkoordinaten tw das Ausgangsbild 1 auf das interpolierende Abbild 23 abgebildet werden. Anhand der interpolierenden Texturkoordinaten tw kann somit eine interpolierende Abbildungsfunktion bestimmt werden, welche das Ausgangsbild 1 auf das interpolierende Abbild 23 abbildet.

In einem weiteren Verfahrensschritt S4 wird das mittels der interpolierenden Abbildungsfunktion auf das interpolierende Abbild 23 abgebildete Ausgangsbild 1 auf ein interpolierendes Anzeigebild 33 abgebildet. Das interpolierende Anzeigebild 33 geht durch Variieren des Interpolationsparameters w von dem ersten Anzeigebild 31 zu dem zweiten Anzeigebild 32 über.

Das Abbilden des interpolierenden Abbilds 23 auf das interpolierende Anzeigebild 33 erfolgt mittels einer interpolierenden Kameraabbildung Kw, welche von dem Interpolationsparameter w abhängt und zwischen der ersten Kameraabbildung K1 und der zweiten Kameraabbildung K2 interpoliert.

Gemäß einer Ausführungsform wird die interpolierende Kameraabbildung Kw durch lineare Interpolation der ersten Kameraabbildung K1 und der zweiten Kameraabbildung K2 gemäß folgender Formel bestimmt:

$$K_w = w \cdot K_1 + (1 - w) \cdot K_2 \; .$$

Gemäß einer weiteren Ausführungsform werden eine interpolierende Transformationsabbildung Vw durch lineare Interpolation der ersten Transformationsabbildung V1 und der zweiten Transformationsabbildung V2 gemäß folgender Formel bestimmt:

$$V_w = w \cdot V_1 + (1 - w) \cdot V_2 \; .$$

Weiter wird eine interpolierende Projektionsabbildung Pw durch lineare Interpolation der ersten Projektionsabbildung P1 mit der zweiten Projektionsabbildung P2 bestimmt:

$$P_w = w \cdot P_1 + (1 - w) \cdot P_2 \; .$$

Die interpolierende Kameraabbildung Kw wird dann durch Verkettung der interpolierenden Transformationsabbildung Vw und der interpolierenden Projektionsabbildung Pw bestimmt, wie folgende Formel ausdrückt:

$$K_w = V_w P_w \; .$$

Die interpolierende Kameraabbildung Kw interpoliert kontinuierlich zwischen der ersten Kameraabbildung K1 (für w = 1) und der zweiten Kameraabbildung K2 (für w = 0).

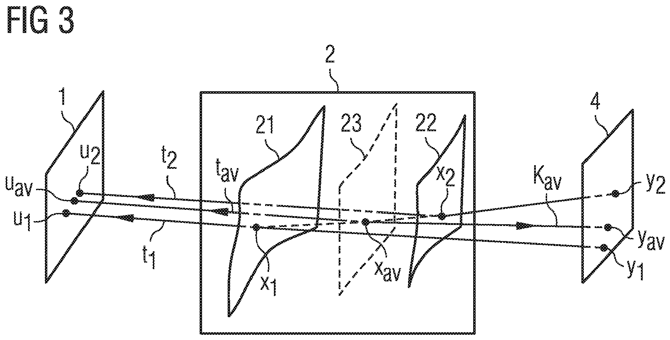

Figur 3 zeigt eine schematische Ansicht zur Erläuterung der Anzeige des interpolierenden Anzeigebilds 33 auf einer Anzeigeeinrichtung 4, insbesondere einem Fahrzeugdisplay in einem Fahrzeug. Hierzu wird der Interpolationsparameter w kontinuierlich zwischen 0 und 1 variiert. Für eine Wert des Interpolationsparameters w gleich 1 werden beispielsweise die ersten Ausgangsbildkoordinaten u1 auf erste Anzeigebildkoordinaten y1 abgebildet. Wird dies für sämtliche erste Ausgangsbildkoordinaten u1 durchgeführt, so wird das Ausgangsbild 1 über das erste Abbild 21 auf das erste Anzeigebild 31 abgebildet und auf der Anzeigeeinrichtung 4 angezeigt.

Wird nun der Interpolationsparameter w verringert, so ändert sich das auf der Anzeigeeinrichtung 4 angezeigte Bild kontinuierlich. So werden beispielsweise für einen bestimmten Wert des Anzeigeparameters w zwischen 0 und 1 entsprechende interpolierende Ausgangsbildkoordinaten uw auf entsprechende interpolierende Anzeigebildkoordinaten yw abgebildet. Wird dies für sämtliche interpolierende Ausgangsbildkoordinaten uw durchgeführt, wird somit das Ausgangsbild 1 über das interpolierende Abbild 23 auf das interpolierende Anzeigebild 33 abgebildet und auf der Anzeigeeinrichtung 4 angezeigt.

Für einen Wert des Interpolationsparameters w gleich 0 wird schließlich das Ausgangsbild 1 auf das zweite Anzeigebild 32 abgebildet und auf der Anzeigeeinrichtung 4 angezeigt.

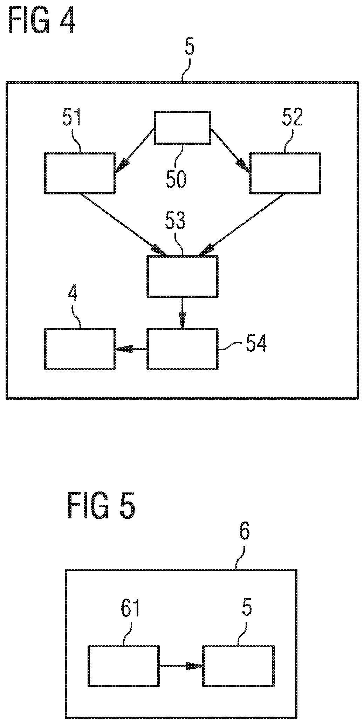

Figur 4 illustriert ein schematisches Blockschaltbild einer Bildbearbeitungsvorrichtung 5 zum Bestimmen eines Übergangs zwischen zwei Anzeigebildern gemäß einer Ausführungsform der Erfindung.

Die Bildbearbeitungsvorrichtung 5 umfasst eine Schnittstelle 50 zum Empfangen eines zweidimensionalen Ausgangsbildes 1, welches beispielsweise von einer externen Kameraeinrichtung bereitgestellt werden kann, und auf einem Speicher der Bildbearbeitungsvorrichtung 5 gespeichert wird. Weiter umfasst die Bildbearbeitungsvorrichtung 5 eine erste Bilderzeugungseinrichtung 51, welche das Ausgangsbild 1 mittels einer ersten Abbildungsfunktion auf ein erstes Abbild 21 in einem dreidimensionalen Modellraum 2 abbildet und das erste Abbild 21 auf ein erstes Anzeigebild 3 abbildet. Die Bilderzeugungseinrichtung 51 umfasst einen Prozessor, welcher die entsprechenden Abbildungsschritte berechnet und durchführt. Die Bilderzeugungseinrichtung 51 kann das erste Anzeigebild 3 insbesondere anhand der oben beschriebenen ersten Texturkoordinaten t1 und der ersten Kameraabbildung K1 erzeugen.

Die Bildbearbeitungsvorrichtung 5 umfasst darüber hinaus eine zweite Bilderzeugungseinrichtung 52, welche das Ausgangsbild 1 mittels einer zweiten Abbildungsfunktion auf ein zweites Abbild 22 in dem dreidimensionalen Modellraum 2 abbildet und das zweite Abbild 22 auf ein zweites Anzeigebild 4 abbildet, wiederum vorzugsweise anhand der oben beschriebenen zweiten Texturkoordinaten t2 und der zweiten Kameraabbildung K2 erzeugen.

Weiter weist die Bildbearbeitungsvorrichtung 5 eine Interpolationseinrichtung 53 auf, welche das Ausgangsbild 1 mittels einer interpolierenden Abbildungsfunktion auf ein interpolierendes Abbild 23 in dem Modellraum 2 abbildet und das interpolierende Abbild 23 durch Interpolieren des ersten Abbilds 21 und des zweiten Abbilds 22 in Abhängigkeit von einem Interpolationsparameter w bestimmt. Vorzugsweise bestimmt die Interpolationseinrichtung 53 das interpolierende Abbild 23 gemäß einem der oben beschriebenen Verfahren.

Die Bildbearbeitungsvorrichtung 5 umfasst eine Übergangsbilderzeugungseinrichtung 54, welche das mittels der interpolierenden Abbildungsfunktion auf das interpolierende Abbild 23 abgebildete Ausgangsbild 1 auf ein interpolierendes Anzeigebild 33 abbildet, welches durch Variieren des Interpolationsparameters w von dem ersten Anzeigebild 31 zu dem zweiten Anzeigebild 32 übergeht. Die Bildbearbeitungsvorrichtung 5 weist eine bereits oben beschriebene Bildanzeigeeinrichtung 4 auf, welche dazu ausgebildet ist, das interpolierende Anzeigebild 33 anzuzeigen. Gemäß einer Ausführungsform sind die erste Bilderzeugungseinrichtung 51, die zweite Bilderzeugungseinrichtung 52, die Interpolationseinrichtung 53 und/oder die Übergangsbilderzeugungseinrichtung 54 miteinander identisch und können beispielsweise Teil einer Recheneinheit oder eines Prozessors sein.

Fig. 5 zeigt ein schematisches Blockschaltbild eines Fahrzeugs 6 gemäß einer Ausführungsform der Erfindung. Das Fahrzeug 6 umfasst eine Kameraeinrichtung 61, welche dazu ausgebildet ist, ein Ausgangsbild zu erzeugen. Weiter umfasst das Fahrzeug 6 eine Bildverarbeitungsvorrichtung 5 zum Bestimmen eines Übergangs zwischen zwei Anzeigebildern 31, 32 anhand des erzeugten Ausgangsbild 1, insbesondere nach einer der oben beschriebenen Ausführungsformen.

BEZUGSZEICHENLISTE

| 1 | Ausgangsbild |
|---|---|
| 2 | dreidimensionaler Modellraum |
| 21 | erstes Abbild |
| 22 | zweites Abbild |
| 31 | erstes Anzeigebild |
| 32 | zweites Anzeigebild |

33 interpolierendes Anzeigebild
4 Anzeigeeinrichtung
5 Bildverarbeitungsvorrichtung
51 erste Bilderzeugungseinrichtung
52 zweite Bilderzeugungseinrichtung
53 Interpolationseinrichtung
54 Übergangsbilderzeugungseinrichtung
K1 erste Kameraabbildung
K2 zweite Kameraabbildung
Kw interpolierende Kameraabbildung
t1 erste Texturkoordinaten
t2 zweite Texturkoordinaten
tw interpolierende Texturkoordinaten
u1 erste Ausgangsbildkoordinaten
u2 zweite Ausgangsbildkoordinaten
uw interpolierende Ausgangsbildkoordinaten
P1 erste Projektionsabbildung
P2 zweite Projektionsabbildung
Pw interpolierende Projektionsabbildung
V1 erste Transformationsabbildung
V2 zweite Transformationsabbildung
Vw interpolierende Transformationsabbildung
w Interpolationsparameter
x1 erster Gitterpunkt
x2 zweiter Gitterpunkt
xw interpolierender Gitterpunkt
y1 erste Anzeigebildkoordinaten
y2 zweite Anzeigebildkoordinaten
yw interpolierende Anzeigebildkoordinaten

## Patentansprüche

1. Verfahren zum Bestimmen eines Übergangs zwischen zwei Anzeigebildern (31, 32), mit den Schritten:

Abbilden (S1) eines zweidimensionalen Ausgangsbildes (1) mittels einer ersten Abbildungsfunktion auf ein erstes Abbild (21) in einem dreidimensionalen Modellraum (2) und Abbilden des ersten Abbilds (21) auf ein erstes Anzeigebild (31);
Abbilden (S2) des zweidimensionalen Ausgangsbilds (1) mittels einer zweiten Abbildungsfunktion auf ein zweites Abbild (22) in dem dreidimensionalen Modellraum (2) und Abbilden des zweiten Abbilds (22) auf ein zweites Anzeigebild (32);
Abbilden (S3) des Ausgangsbildes (1) mittels einer interpolierenden Abbildungsfunktion auf ein interpolierendes Abbild (23) in dem Modellraum (2), wobei das interpolierende Abbild (23) durch Interpolieren des ersten Abbilds (21) und des zweiten Abbilds (22) in Abhängigkeit von einem Interpolationsparameter (w) bestimmt wird; und
Abbilden (S4) des mittels der interpolierenden Abbildungsfunktion auf das interpolierende Abbild (23) abgebildeten Ausgangsbildes (1) auf ein interpolierendes Anzeigebild (33), welches durch Variieren des Interpolationsparameters (w) von dem ersten Anzeigebild (31) zu dem zweiten Anzeigebild (32) übergeht, wobei eine erste Kameraabbildung (K1) und eine zweiten Kameraabbildung (K2) bestimmt werden, welche das auf das erste Abbild (21) bzw. zweite Abbild (22) projizierte Ausgangsbild (1) auf das erste Anzeigebild (21) bzw. zweite Anzeigebild (22) abbilden, und wobei eine interpolierende Kameraabbildung (Kw) bestimmt wird, welche das mittels der interpolierenden Abbildungsfunktion auf das interpolierende Abbild (23) abgebildete Ausgangsbild (1) auf das interpolierende Anzeigebild (23) abbildet, in Abhängigkeit von dem Interpolationsparameter (w); wobei die Kameraabbildungen (K1, K2, Kw) virtuellen Kameras in dem Modellraum (2) entsprechen.

2. Verfahren nach Anspruch 1, wobei die interpolierende Abbildungsfunktion durch Interpolieren der ersten Abbildungsfunktion und der zweiten Abbildungsfunktion in Abhängigkeit von dem Interpolationsparameter (w) bestimmt wird.

**3.** Verfahren nach Anspruch 1 oder 2,

wobei der dreidimensionale Modellraum (2) ein Gitter umfasst;
wobei das erste Abbild (21) eine erste Menge von Gitterpunkten (x1) des Gitters aufweist, und wobei die erste Abbildungsfunktion anhand von ersten Texturkoordinaten (t1) der Gitterpunkte der ersten Menge von Gitterpunkten bestimmt wird; und
wobei das zweite Abbild (21) eine zweite Menge von Gitterpunkten (x2) des Gitters aufweist, und wobei die zweite Abbildungsfunktion anhand von zweiten Texturkoordinaten (t2) der Gitterpunkte der zweiten Menge von Gitterpunkten (x2) bestimmt wird.

**4.** Verfahren nach Anspruch 3,

wobei jedem Gitterpunkt (x1) der ersten Menge von Gitterpunkten ein Gitterpunkt (x2) der zweiten Menge von Gitterpunkten zugeordnet wird;
wobei das interpolierende Abbild (23) für jeden Gitterpunkt (x1) der ersten Menge von Gitterpunkten durch Interpolieren mit dem zugeordneten Gitterpunkt (x2) der zweiten Menge von Gitterpunkten bestimmt wird; und
wobei die interpolierende Abbildungsfunktion für jeden Gitterpunkt (x1) der ersten Menge von Gitterpunkten durch Interpolieren der entsprechenden ersten Texturkoordinaten (t1) mit den zweiten Texturkoordinaten (t2) des zugeordneten Gitterpunkts (x2) der zweiten Menge von Gitterpunkten bestimmt wird.

**5.** Verfahren nach Anspruch 4, wobei das Zuordnen eines jeweiligen Gitterpunkts (x2) der zweiten Menge von Gitterpunkten zu jedem Gitterpunkt (x1) der ersten Menge von Gitterpunkten mittels Nächster-Nachbar-Suche durchgeführt wird.

**6.** Verfahren nach einem der vorangehenden Ansprüche, wobei das Bestimmen der interpolierenden Kameraabbildung (Kw) das Interpolieren der ersten Kameraabbildung (K1) und der zweiten Kameraabbildung (K2) umfasst.

**7.** Verfahren nach einem der Ansprüche 1 bis 5,

wobei das Bestimmen der ersten Kameraabbildung (K1) und der zweiten Kameraabbildung (K2) das Verketten einer ersten bzw. zweiten Transformationsabbildung (V1, V2) mit einer ersten bzw. zweiten Projektionsabbildung (P1, P2) umfasst;
wobei die erste bzw. zweite Transformationsabbildung (V1, V2) das erste bzw. zweite Abbild (21, 22) auf ein transformiertes erstes bzw. zweites Abbild abbildet; und
wobei die erste bzw. zweite Projektionsabbildung (P1, P2) das transformierte erste bzw. zweite Abbild auf das erste bzw. zweite Anzeigebild (31, 32) projiziert.

**8.** Verfahren nach Anspruch 7,

wobei das Bestimmen der interpolierenden Kameraabbildung (Kw) das Verketten einer interpolierenden Transformationsabbildung (Vw) mit einer interpolierenden Projektionsabbildung (Pw) umfasst;
wobei die interpolierende Transformationsabbildung (Vw) durch Interpolieren der ersten Transformationsabbildung (V1) und der zweiten Transformationsabbildung (V2) in Abhängigkeit von dem Interpolationsparameter (w) bestimmt wird; und
wobei die interpolierende Projektionsabbildung (Pw) durch Interpolieren der ersten Projektionsabbildung (P1) und der zweiten Projektionsabbildung (P2) in Abhängigkeit von dem Interpolationsparameter (w) bestimmt wird.

**9.** Verfahren nach einem der vorangehenden Ansprüche, wobei das Bestimmen des interpolierenden Abbilds (33) und/oder das Bestimmen der interpolierenden Abbildungsfunktion durch lineare oder polynomiale Interpolation durchgeführt werden.

**10.** Bildbearbeitungsvorrichtung (5) zum Bestimmen eines Übergangs zwischen zwei Anzeigebildern (31, 32), mit:

einer ersten Bilderzeugungseinrichtung (51), welche ein zweidimensionales Ausgangsbild (1) mittels einer ersten Abbildungsfunktion auf ein erstes Abbild (21) in einem dreidimensionalen Modellraum (2) abbildet und das erste Abbild (21) auf ein erstes Anzeigebild (3) abbildet;
einer zweiten Bilderzeugungseinrichtung (52), welche das Ausgangsbild (1) mittels einer zweiten Abbildungsfunktion auf ein zweites Abbild (22) in dem dreidimensionalen Modellraum (2) abbildet und das zweite Abbild

(22) auf ein zweites Anzeigebild (4) abbildet;

einer Interpolationseinrichtung (53), welche das Ausgangsbild (1) mittels einer interpolierenden Abbildungsfunktion auf ein interpolierendes Abbild (23) in dem Modellraum (2) abbildet und das interpolierende Abbild (23) durch Interpolieren des ersten Abbilds (21) und des zweiten Abbilds (22) in Abhängigkeit von einem Interpolationsparameter (w) bestimmt; und

einer Übergangsbilderzeugungseinrichtung (54), welche das mittels der interpolierenden Abbildungsfunktion auf das interpolierende Abbild (23) abgebildete Ausgangsbild (1) auf ein interpolierendes Anzeigebild (33) abbildet, welches durch Variieren des Interpolationsparameters (w) von dem ersten Anzeigebild (31) zu dem zweiten Anzeigebild (32) übergeht, wobei die Übergangsbilderzeugungseinrichtung (54) dazu ausgebildet ist, eine erste Kameraabbildung (K1) und eine zweiten Kameraabbildung (K2) zu bestimmen, welche das auf das erste Abbild (21) bzw. zweite Abbild (22) projizierte Ausgangsbild (1) auf das erste Anzeigebild (21) bzw. zweite Anzeigebild (22) abbilden, und eine interpolierende Kameraabbildung (Kw) zu bestimmen, welche das mittels der interpolierenden Abbildungsfunktion auf das interpolierende Abbild (23) abgebildete Ausgangsbild (1) auf das interpolierende Anzeigebild (23) abbildet, in Abhängigkeit von dem Interpolationsparameter (w);

wobei die Kameraabbildungen virtuellen Kameras in dem Modellraum (2) entsprechen.

11. Bildbearbeitungsvorrichtung (5) nach Anspruch 10, mit einer Bildanzeigeeinrichtung (4), welche dazu ausgebildet ist, das interpolierende Anzeigebild (33) anzuzeigen.

12. Bildbearbeitungsvorrichtung (5) nach Anspruch 10 oder 11, wobei die Interpolationseinrichtung (53) die interpolierende Abbildungsfunktion durch Interpolieren der ersten Abbildungsfunktion und der zweiten Abbildungsfunktion in Abhängigkeit von dem Interpolationsparameter (w) bestimmt.

13. Bildverarbeitungsvorrichtung (5) nach einem der Ansprüche 10 bis 12, wobei die Interpolationseinrichtung (53) das interpolierende Abbild (23) und/oder die interpolierende Abbildungsfunktion durch lineare oder polynomiale Interpolation bestimmt.

14. Fahrzeug (6), mit

einer Kameraeinrichtung (61), welche dazu ausgebildet ist, ein Ausgangsbild (1) zu erzeugen;

mit einer Bildverarbeitungsvorrichtung (5) zum Bestimmen eines Übergangs zwischen zwei Anzeigebildern (31, 32) anhand des erzeugten Ausgangsbild (1) nach einem der Ansprüche 10 bis 13.

## Claims

1. Method for determining a transition between two display images (31, 32), comprising the steps:

mapping (S1) a two-dimensional initial image (1) by means of a first mapping function onto a first mapped image (21) in a three-dimensional model space (2) and mapping the first mapped image (21) onto a first display image (31);

mapping (S2) the two-dimensional initial image (1) by means of a second mapping function onto a second mapped image (22) in the three-dimensional model space (2) and mapping the second mapped image (22) onto a second display image (32);

mapping (S3) the initial image (1) by means of an interpolating mapping function onto an interpolating mapped image (23) in the model space (2), wherein the interpolating mapped image (23) is determined by interpolation of the first mapped image (21) and the second mapped image (22) as a function of an interpolation parameter (w); and

mapping (S4) the initial image (1), mapped by means of the interpolating mapping function onto the interpolating mapped image (23), onto an interpolating display image (33) which transitions from the first display image (31) to the second display image (32) by variation of the interpolation parameter (w), wherein a first camera mapping (K1) and a second camera mapping (K2) are determined, which map the initial image (1) projected onto the first mapped image (21) and second mapped image (22), respectively, onto the first display image (21) and second display image (22), respectively, and wherein an interpolating camera mapping (Kw) is determined, which maps the initial image (1), mapped by means of the interpolating mapping function onto the interpolating mapped image (23), onto the interpolating display image (23), as a function of the interpolation parameter (w);

wherein the camera mappings (K1, K2, Kw) correspond to virtual cameras in the model space (2).

**2.** Method according to Claim 1, wherein the interpolating mapping function is determined by interpolation of the first mapping function and the second mapping function as a function of the interpolation parameter (w).

**3.** Method according to Claim 1 or 2,

wherein the three-dimensional model space (2) comprises a grid;
wherein the first mapped image (21) has a first set of grid points (x1) of the grid, and wherein the first mapping function is determined on the basis of first texture coordinates (t1) of the grid points of the first set of grid points; and
wherein the second mapped image (21) has a second set of grid points (x2) of the grid, and wherein the second mapping function is determined on the basis of second texture coordinates (t2) of the grid points of the second set of grid points (x2).

**4.** Method according to Claim 3,

wherein each grid point (x1) of the first set of grid points is assigned a grid point (x2) of the second set of grid points;
wherein the interpolating mapped image (23) is determined for each grid point (x1) of the first set of grid points by interpolation with the assigned grid point (x2) of the second set of grid points; and
wherein the interpolating mapping function is determined for each grid point (x1) of the first set of grid points by interpolation of the corresponding first texture coordinates (t1) with the second texture coordinates (t2) of the assigned grid point (x2) of the second set of grid points.

**5.** Method according to Claim 4, wherein assigning a respective grid point (x2) of the second set of grid points to each grid point (x1) of the first set of grid points is carried out by means of a nearest neighbour search.

**6.** Method according to any of the preceding claims, wherein determining the interpolating camera mapping (Kw) comprises the interpolation of the first camera mapping (K1) and the second camera mapping (K2).

**7.** Method according to any of Claims 1 to 5,

wherein determining the first camera mapping (K1) and the second camera mapping (K2) comprises concatenating a first and second transformation mapping (V1, V2) with a first and second projection mapping (P1, P2), respectively;
wherein the first and second transformation mapping (V1, V2) map the first and second mapped image (21, 22), respectively, onto a transformed first and second mapped image, respectively; and
wherein the first and second projection mapping (P1, P2) project the transformed first and second mapped image, respectively, onto the first and second display image (31, 32), respectively.

**8.** Method according to Claim 7,

wherein determining the interpolating camera mapping (Kw) comprises concatenating an interpolating transformation mapping (Vw) with an interpolating projection mapping (Pw);
wherein the interpolating transformation mapping (Vw) is determined by interpolation of the first transformation mapping (V1) and the second transformation mapping (V2) as a function of the interpolation parameter (w); and
wherein the interpolating projection mapping (Pw) is determined by interpolation of the first projection mapping (P1) and the second projection mapping (P2) as a function of the interpolation parameter (w).

**9.** Method according to any of the preceding claims, wherein determining the interpolating mapped image (33) and/or determining the interpolating mapping function are/is carried out by linear or polynomial interpolation.

**10.** Image processing apparatus (5) for determining a transition between two display images (31, 32), comprising:

a first image generating device (51), which maps a two-dimensional initial image (1) by means of a first mapping function onto a first mapped image (21) in a three-dimensional model space (2) and maps the first mapped image (21) onto a first display image (3);
a second image generating device (52), which maps the initial image (1) by means of a second mapping function onto a second mapped image (22) in the three-dimensional model space (2) and maps the second mapped image (22) onto a second display image (4);
an interpolation device (53), which maps the initial image (1) by means of an interpolating mapping function onto an interpolating mapped image (23) in the model space (2) and determines the interpolating mapped image (23) by interpolation of the first mapped image (21) and the second mapped image (22) as a function of an interpolation parameter (w); and

a transition image generating device (54), which maps the initial image (1), mapped by means of the interpolating mapping function onto the interpolating mapped image (23), onto an interpolating display image (33) which transitions from the first display image (31) to the second display image (32) by variation of the interpolation parameter (w), wherein the transition image generating device (54) is configured to determine a first camera mapping (K1) and a second camera mapping (K2), which map the initial image (1) projected onto the first mapped image (21) and second mapped image (22), respectively, onto the first display image (21) and second display image (22), respectively, and to determine an interpolating camera mapping (Kw), which maps the initial image (1), mapped by means of the interpolating mapping function onto the interpolating mapped image (23), onto the interpolating display image (23), as a function of the interpolation parameter (w);

wherein the camera mappings correspond to virtual cameras in the model space (2).

**11.** Image processing apparatus (5) according to Claim 10, comprising an image display device (4) configured to display the interpolating display image (33).

**12.** Image processing apparatus (5) according to Claim 10 or 11, wherein the interpolation device (53) determines the interpolating mapping function by interpolation of the first mapping function and the second mapping function as a function of the interpolation parameter (w).

**13.** Image processing apparatus (5) according to any of Claims 10 to 12, wherein the interpolation device (53) determines the interpolating mapped image (23) and/or the interpolating mapping function by linear or polynomial interpolation.

**14.** Vehicle (6), comprising

a camera device (61) configured to generate an initial image (1);
comprising an image processing apparatus (5) for determining a transition between two display images (31, 32) on the basis of the generated initial image (1) according to any of Claims 10 to 13.

**Revendications**

**1.** Procédé de détermination d'une transition entre deux images d'affichage (31, 32), comportant les étapes consistant à :

reproduire (S1) une image initiale bidimensionnelle (1) au moyen d'une première fonction de reproduction sur une première reproduction (21) dans un espace de modélisation tridimensionnel (2) et reproduire la première reproduction (21) sur une première image d'affichage (31) ;

reproduire (S2) l'image initiale bidimensionnelle (1) au moyen d'une seconde fonction de reproduction sur une seconde reproduction (22) dans l'espace de modélisation tridimensionnel (2) et reproduire la seconde reproduction (22) sur une seconde image d'affichage (32) ;

reproduire (S3) l'image initiale (1) au moyen d'une fonction de reproduction interpolante sur une reproduction interpolante (23) dans l'espace de modélisation (2), dans lequel la reproduction interpolante (23) est déterminée par interpolation de la première reproduction (21) et de la seconde reproduction (22) en fonction d'un paramètre d'interpolation (w) ; et

reproduire (S4) l'image initiale (1) reproduite sur la reproduction interpolante (23) au moyen de la fonction de reproduction interpolante sur une image d'affichage interpolante (33) qui effectue une transition de la première image d'affichage (31) à la seconde image d'affichage (32) par variation du paramètre d'interpolation (w), dans lequel une première reproduction de caméra (K1) et une seconde reproduction de caméra (K2) sont déterminées, lesquelles reproduisent l'image initiale (1) projetée sur la première reproduction (21) ou la seconde reproduction (22), sur la première image d'affichage (21) ou la seconde image d'affichage (22), et dans lequel une reproduction de caméra interpolante (Kw) est déterminée, laquelle reproduit l'image initiale (1) reproduite sur la reproduction interpolante (23) au moyen de la fonction de reproduction interpolante, sur l'image d'affichage interpolante (23), en fonction du paramètre d'interpolation (w) ;

dans lequel les reproductions de caméra (K1, K2, Kw) correspondent à des caméras virtuelles dans l'espace de modélisation (2).

**2.** Procédé selon la revendication 1, dans lequel la fonction de reproduction interpolante est déterminée par interpolation de la première fonction de reproduction et de la seconde fonction de reproduction en fonction du paramètre d'interpolation (w).

**3.** Procédé selon la revendication 1 ou 2,

dans lequel l'espace de modélisation tridimensionnel (2) comprend une grille ;
dans lequel la première reproduction (21) comporte un premier ensemble de points de grille (x1) de la grille, et dans lequel la première fonction de reproduction est déterminée sur la base de premières coordonnées de texture (t1) des points de grille du premier ensemble de points de grille ; et
dans lequel la seconde reproduction (21) comporte un second ensemble de points de grille (x2) de la grille, et dans lequel la seconde fonction de reproduction est déterminée sur la base de secondes coordonnées de texture (t2) des points de grille du second ensemble de points de grille.

**4.** Procédé selon la revendication 3,

dans lequel à chaque point de grille (x1) du premier ensemble de points de grille est associé un point de grille (x2) du second ensemble de points de grille ;
dans lequel la reproduction interpolante (23) est déterminée pour chaque point de grille (x1) du premier ensemble de points de grille par interpolation avec le point de grille associé (x2) du second ensemble de points de grille ; et
dans lequel la fonction de reproduction interpolante est déterminée pour chaque point de grille (x1) du premier ensemble de points de grille par interpolation des premières coordonnées de texture (t1) correspondantes avec les secondes coordonnées de texture (t2) du point de grille (x2) associé du second ensemble de points de grille.

**5.** Procédé selon la revendication 4, dans lequel l'association d'un point de grille (x2) respectif du second ensemble de points de grille à chaque point de grille (x1) du premier ensemble de points de grille est effectuée par recherche de plus proche voisin.

**6.** Procédé selon l'une quelconque des revendications précédentes, dans lequel la détermination de la reproduction de caméra interpolante (Kw) comprend l'interpolation de la première reproduction de caméra (K1) et de la seconde reproduction de caméra (K2).

**7.** Procédé selon l'une quelconque des revendications 1 à 5,

dans lequel la détermination de la première reproduction de caméra (K1) et de la seconde reproduction de caméra (K2) comporte l'enchaînement d'une première ou d'une seconde reproduction de transformation (V1, V2) avec une première ou une seconde reproduction de projection (P1, P2) ;
dans lequel la première ou la seconde reproduction de transformation (V1, V2) reproduit la première ou la seconde reproduction (21, 22) sur une première ou une seconde reproduction transformée ; et
dans lequel la première ou la seconde reproduction de projection (P1, P2) projette la première ou la seconde reproduction transformée sur la première ou la seconde image d'affichage (31, 32).

**8.** Procédé selon la revendication 7,

dans lequel la détermination de la reproduction de caméra interpolante (Kw) comprend l'enchaînement d'une reproduction de transformation interpolante (Vw) avec une reproduction de projection interpolante (Pw) ;
dans lequel la reproduction de transformation interpolante (Vw) est déterminée par interpolation de la première reproduction de transformation (V1) et de la seconde reproduction de transformation (V2) en fonction du paramètre d'interpolation (w) ; et
dans lequel la reproduction de projection interpolante (Pw) est déterminée par interpolation de la première reproduction de projection (P1) et de la seconde reproduction de projection (P2) en fonction du paramètre d'interpolation (w).

**9.** Procédé selon l'une quelconque des revendications précédentes, dans lequel la détermination de la reproduction interpolante (33) et/ou la détermination de la fonction de reproduction interpolante sont effectuées par interpolation linéaire ou polynomiale.

**10.** Dispositif de traitement d'image (5) permettant de déterminer une transition entre deux images d'affichage (31, 32), comportant :

un premier moyen de génération d'image (51) qui reproduit une image initiale bidimensionnelle (1) au moyen d'une première fonction de reproduction sur une première reproduction (21) dans un espace de modélisation tridimensionnel (2) et reproduit la première reproduction (21) sur une première image d'affichage (3) ;
un second moyen de génération d'image (52) qui reproduit l'image initiale (1) au moyen d'une seconde fonction de reproduction sur une seconde reproduction (22) dans l'espace de modélisation tridimensionnel (2) et reproduit la seconde reproduction (22) sur une seconde image d'affichage (4) ;
un moyen d'interpolation (53) qui reproduit l'image initiale (1) au moyen d'une fonction de reproduction interpolante sur une reproduction interpolante (23) dans l'espace de modélisation (2) et qui détermine la reproduction interpolante (23) par interpolation de la première image (21) et de la seconde image (22) en fonction d'un paramètre d'interpolation (w) ; et
un moyen de génération d'image de transition (54) qui reproduit l'image initiale (1) reproduite sur la reproduction interpolante (23) au moyen de la fonction de reproduction interpolante sur une image d'affichage interpolante (33), qui effectue une transition de la première image d'affichage (31) à la seconde image d'affichage (32) par variation du paramètre d'interpolation (w), dans lequel le moyen de génération d'image de transition (54) est conçu pour déterminer une première reproduction de caméra (K1) et une seconde reproduction de caméra (K2), lesquelles reproduisent l'image initiale (1) projetée sur la première reproduction (21) ou la seconde reproduction (22), sur la première image d'affichage (21) ou la seconde image d'affichage (22), et pour déterminer une reproduction de caméra interpolante (Kw), laquelle reproduit l'image initiale (1) reproduite sur la reproduction interpolante (23) au moyen de la fonction de reproduction interpolante, sur l'image d'affichage interpolante (23), en fonction du paramètre d'interpolation (w) ;
dans lequel les reproductions de caméra (K1, K2, Kw) correspondent à des caméras virtuelles dans l'espace de modélisation (2).

**11.** Dispositif de traitement d'image (5) selon la revendication 10, comportant un moyen d'affichage d'image (4) qui est conçu pour afficher l'image d'affichage interpolante (33).

**12.** Dispositif de traitement d'image (5) selon la revendication 10 ou 11, dans lequel le moyen d'interpolation (53) détermine la fonction de reproduction interpolante par interpolation de la première fonction de reproduction et de la seconde fonction de reproduction en fonction du paramètre d'interpolation (w).

**13.** Dispositif de traitement d'image (5) selon l'une quelconque des revendications 10 à 12, dans lequel le moyen d'interpolation (53) détermine la reproduction interpolante (23) et/ou la fonction de reproduction interpolante par interpolation linéaire ou polynomiale.

**14.** Véhicule (6), comportant
un moyen à caméra (61) qui est conçu pour générer une image initiale (1) ; comportant un dispositif de traitement d'image (5) permettant de déterminer une transition entre deux images d'affichage (31, 32) sur la base de l'image initiale (1) générée selon l'une quelconque des revendications 10 à 13.

FIG 1

```
┌─────────────────────┐
│                     │── S1
│                     │
└─────────────────────┘
          │
          ▼
┌─────────────────────┐
│                     │── S2
│                     │
└─────────────────────┘
          │
          ▼
┌─────────────────────┐
│                     │── S3
│                     │
└─────────────────────┘
          │
          ▼
┌─────────────────────┐
│                     │── S4
│                     │
└─────────────────────┘
```

FIG 2

FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6597368 B1

- DE 102013209159 B4

**In der Beschreibung aufgeführte Nicht-Patentliteratur**

- **KANAI et al.** Metamorphosis of arbitrary triangular meshe. *IEEE Computer Graphics and Applications,* 2000, vol. 20 (2), 62-75

- **SHEFFER et al.** Pyramid coordinates for morphing and deformation. *3D data Processing, Visualization and Transmission,* 2004, 68-75